# EUROPEAN PATENT APPLICATION

(11) **EP 4 261 760 A1**
(43) Date of publication of application: **18.10.2023**
(21) Application number: 22168649.6
(22) Date of filing: 15.04.2022
(51) Int. Cl.: G06Q 30/02

(54) **HYBRID SEGMENTED MACHINE LEARNING BASED METHOD FOR PERFORMING HIGHLY ACCURATE VALUATION OF REAL ESTATE**

(71) Applicant: Tiko Real Estate Technologies SARL, 1420 Luxembourg (LU)
(72) Inventor: Yöntem, Gökmen Görkem, ISTANBUL (TR)
(74) Representative: Kayahan, Senem

(57) **Abstract**

The present invention is a method and algorithm for performing highly accurate valuation of real estate. The aim of the invention is making real estate property valuations by combining a mathematical listing valuation function and machine learning algorithms in a hybrid way. The invention provides data models for different price-segments to increase accuracy. Instead of using a single data model per city, price-segmented data models are created and the models are trained with listings belonging to those specific price segments.

## Description

### TECHNICAL FIELD

The present invention is a method and algorithm for performing highly accurate valuation of real estate. The aim of the invention is making real estate property valuations by combining a mathematical listing valuation function and machine learning algorithms in a hybrid way.

### BACKGROUND

Automated valuation models (AVM) are now widely used in the real-estate industry to calculate market value of properties. Most of the AVMs run purely on statistical information and mathematical functions. Another method of estimating the real market value of a property includes usage of machine learning algorithms.

Today, machine learning models consume a lot of resources. Therefore, the common approach is to deploy expensive servers with large storage, fast memory and powerful processors. The larger the data the machine learning platform uses to make predictions, the more resources are needed.

If the machine learning model is used to make predictions for a wide range of data, the processing power required to make estimations increases and the operation takes more time.

Using the same model for a wide range may result in inaccurate property price prediction.

During the tests it was surprisingly discovered that the accuracy was changing among different price segments. The invention provides data models for different price-segments to increase accuracy. Instead of using a single data model per city, price-segmented data models are created and the models are trained with listings belonging to those specific price segments.

When evaluating a property, characteristics such as size, number of rooms, building age, additional amenities (garage, terrace, etc...) and Point of Interests (POI) around the property such as restaurants, public transport, groceries and city landmarks are considered. The listing valuation algorithm calculates the potential listing value of the property by using the comparable listings around the property subject to evaluation. Once the potential listing value is calculated, the corresponding price-segmented data model can be chosen to estimate the real market value.

Open notary data is freely published by government resources and used for adjusting the valuation of a specific neighborhood after the calculation of the market value using a corresponding price-segmented model. Narrowing the ranges by creating a data model for each segment and using these segment based data models increased the speed of valuations and reduced the need for additional resources. Creating segment base models increased accuracy as the new models are trained with data belonging to that segment.

Hybrid segment based machine learning algorithm (HSMLA) of the invention, is based on the idea of creating segmented data models by training the models with the data belonging to that segment for increasing model accuracy. The purpose of machine learning based valuation of the invention, is to speed up and automate the home buying and selling process. HSMLA algorithm aims to reduce the deviation error rate by deciding which segmented model should be applied to a property. This is accomplished by looking at comparable properties' listings in the neighborhood, proximity to points of interest (POI), property characteristics, and market pricing trends, applying the correct segment-based data model and normalizing the output with notary data.

The aim of the HSMLA is to increase the accuracy of machine learning data models that are used to evaluate market value of properties.

### BRIEF DESCRIPTION OF THE DRAWINGS

The accompanying drawings, which are incorporated in and constitute a part of this disclosure, illustrate exemplary embodiments and, together with the description, to explain the disclosed principles:
FIG 1. General flowchart of all processes for HSMLA
FIG 2. HSMLA Workflow: An example flowchart of machine learning processes in HSMLA.
FIG 3. Data Analysis Step: An example block diagram of how data is analyzed by machine learning in HSMLA.
FIG 4. Preprocessing Step: An example flowchart of how data is processed and pipelines are created by machine learning in HSMLA.
FIG 5. Modelling Step: An example flow chart of how machine learning models are built in HSMLA.
FIG 6. Listing Valuation Step: An example flow chart of how the listing valuation in the HSMLA is calculated.
FIG 7. API-general-workflow: Working environment of the HSMLA structure, what other environments it relates to, and what it benefits from.
FIG 8. Valuation-generation-flow: shows what type of data comes together for HSMLA and shows the general headings of machine learning steps.
FIG 9. API-detailed-workflow: Machine learning steps in the HSMLA, the data used for the prediction, and the derivation of the prediction.

### BRIEF DESCRIPTION OF THE INVENTION

HSMLA consists of 3 basic elements. The first of these includes the creation of machine learning models, the second includes the way machine learning models are used, and the third includes databases that machine learning models benefit from. Database is the place where all information needed by HSMLA is stored. Distance to notary, statistical and POI data, and proximity to points of interest are calculated with the help of open-source projects in the database. The data in the database is updated on a daily basis with most recent information collected from the web. When a listing is being evaluated, data is pulled from the database first and processed within the modeling environment. A following data analysis is used as input for the algorithm ultimately.

Machine learning model creation workflow starts with preprocessing the data with pipelines that prepares the data for machine learning model training. Trained models and pipelines are delivered to be used by Property Valuation API (application programming interface). Property Valuation API is a microservice that acquires property data and listing valuation. This process is started by a request sent via backend servers. By using the provided listing valuation the Property Valuation API decides which price-segmented model to be used to evaluate the property. Property related information is combined with POI, statistical, transaction, notary data and proximity to POIs that are extracted from the database. These combined data points are used as input to the chosen price-segmented model and the price of property is evaluated in less than 10 seconds. The estimated price is sent back to the backend servers.

### DETAILED DESCRIPTION OF THE INVENTION

HSMLA is a computer-implemented, comprehensive and automated method. It contains many steps and parameters. The structure of HSMLA can be examined under 3 sub-headings. These are the database, machine learning and Property Valuation API side.

A relational database is a medium where all data needed by machine learning (ML) models is collected and stored. PostgreSQL is used as the only relational database centered for storing data needed, as well as several extensions and tools for overcoming performance bottlenecks and increasing the core database capabilities. PostgreSQL, as its own definition, is a powerful, open source object-relational database system that uses and extends the SQL language combined with many features that safely store and scale the most complicated data workloads.

PostgreSQL, also needs several extensions and tools for overcoming performance bottlenecks and increasing the core database capabilities. PostgreSQL, as its own definition, is a powerful, open source object-relational database system that uses and extends the SQL language combined with many features that safely store and scale the most complicated data workloads.

Database usability is key since features of a platform are always well-defined. However, PostgreSQL is a highly - extensible database offering tons of extensions for very specific features. Extensions are easy to use plugins that work on PostgreSQL database management systems and several extensions are used here to achieve higher performance and the handling of necessary data types.

Regarding data types handled in the database management system, PostgreSQL offers many advanced data types except common ones. Valuations are highly dependent on location data which is called spatial data which can be defined as data along with earth coordinates it is binded to. Such data must be stored in a spatial database that must be capable of understanding and manipulating data and coordinates at the same time.

First and foremost, PostGIS is the spatial database extension which is the most vital PostgreSQL extension used. Since spatial data needs to be handled with high performance, PostGIS provides hundreds of exclusive functions and methods.

Considering the query speed and frequency, PostgreSQL database could lack performance under several circumstances such as high volume tables with location data. Real estate data needs really fast filtering, clustering, classification and handling in machine learning. This is accomplished by integrating a specific search - engine structure, namely Elasticsearch. It provides a lightning - fast search capability by means of inverted index.

Elasticsearch is generally used as a search engine based on Lucene engine. PostgreSQL searching capabilities with the introduction of Elasticsearch, searching and getting true responses become faster than getting the same results as ordinary PostgreSQL queries.

In order to favor Elasticsearch, ZomboDB extension is activated on PostgreSQL for maintaining data synchronization between the two servers. ZomboDB provides keeping the data stored in PostgreSQL and Elasticsearch same while providing much faster response when queried directly from Elasticsearch.

Database, mainly stores the data for real estate listings, administrative borders for spatial analysis of those listings and analytics tables produced for ML valuation, POI for valuating the real estate value and data related to transaction management.

HSMLA is using below listed data for training segmented models. The stored data is real estate data that includes the characteristics collected from property listings such as list price of the property, number of bathrooms and bedrooms, whether there is an elevator or not, etc... In addition, by using the location information of the property other types of data are produced to increase the data points and strengthen the algorithms. The generated data includes statistical data and proximity information to POIs. The data is obtained by creating procedures and tables in the database. Later, generated data is combined with the real estate data in the database with the help of SQL query and made ready for HSMLA.

The statistical data was determined by using the longitude latitude values of the property. Using the longitude and latitude of the property the location and the other properties in that location can be found and statistics belonging to that area is used. Average price changes in the region, median square meter price, average house age of the region, number of houses for sale can be given as examples of statistical data. POI data is also obtained using location information. POI data includes the number of landmarks within a given square meter diameter of the house. Some of the POI data used in HSMLA are: The number of cafes, supermarkets and parks in 1000 square meters of a house. Proximity data is found by calculating the distance of the closest important points of a house in meters. The nearest airport, town hall and school distance information of a house are the preferred proximity data in HSMLA.

Real estate data, proximity data, POI data and statistical data are combined on the database side and this data is called model data. Then the model data is transferred to the machine learning environment. The ultimate goal on the machine learning side is to analyze the data in detail, bring the data into a format that can be used by the machine learning algorithm, and divide the data into segments and create machine learning models for valuation. Machine learning processes are iterative and need continuous improvement. A detailed analysis is performed to detect possible bad or good situations in the data to be used in HSMLA. Then, data processing pipelines for each segment are created and saved so that the appropriate data for the machine learning algorithm is generated. Thanks to the pipelines, the data is brought into the appropriate format and trained with machine learning algorithms. The trained machine learning algorithms are saved. The saved preprocessing pipelines and machine learning models are delivered to the Property Valuation API for use by the customer.

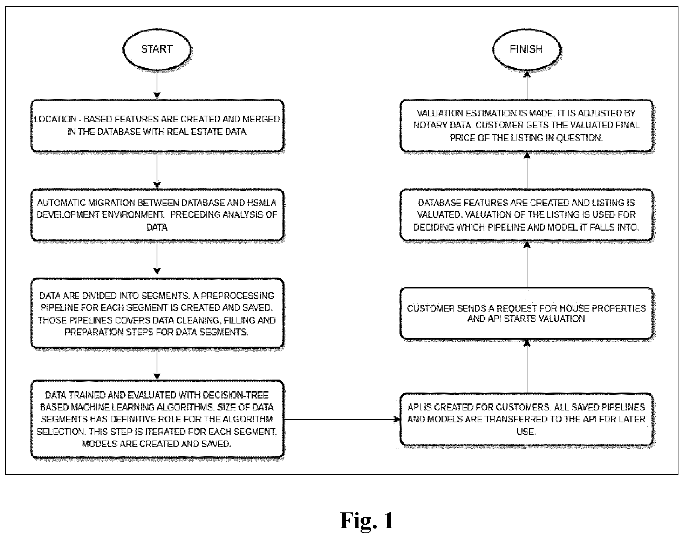

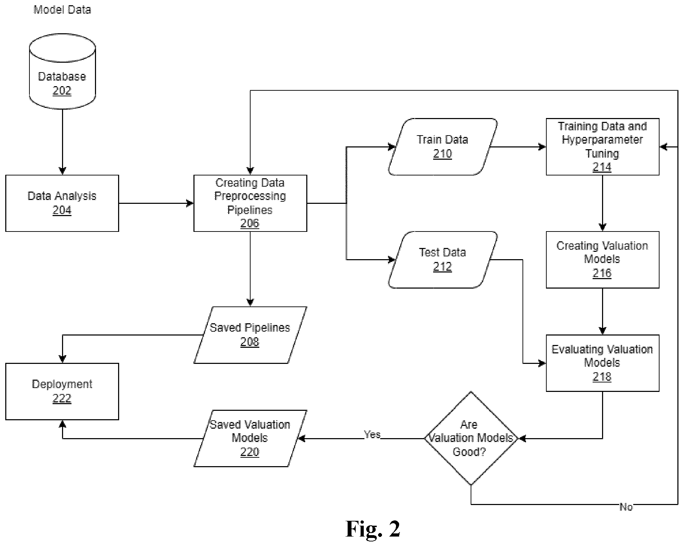

FIG 1. shows the whole machine learning process. There are 8 million houses in total in the data used by machine learning, and this data includes features of the houses (202). These houses are first analyzed in detail in step 204 of FIG 2. FIG 2 shows HSMLA workflow. During this analysis, the bad and good conditions of the data are detected using visualizations and various analysis types. The states here are noted and applied to the data in step 206. In step 206, the appropriate programmable mathematical functions for the operations to be applied to the data are written and placed in the pipeline sequentially. Thus, the data preprocessing pipeline is created and saved (206, 208). Then, the data is first divided into two parts as train and test and enters the created pipeline and is cleaned (206, 210, 212). Then, step 214 is passed, and the appropriate machine learning algorithm is selected for the train data. Then, machine learning models are created by training the train data. The models created are evaluated with test data and the accuracy and quality of the models are measured (212, 216, 218). If the models created are not sufficient and their accuracy is low, the data preprocessing steps are changed or the data is processed with a different algorithm. The above process is repeated. If the models are more robust, they are saved and delivered to the Property Valuation API side to be used by the customers with the recorded pipelines, that is, the deployment (222) stage is passed (220).

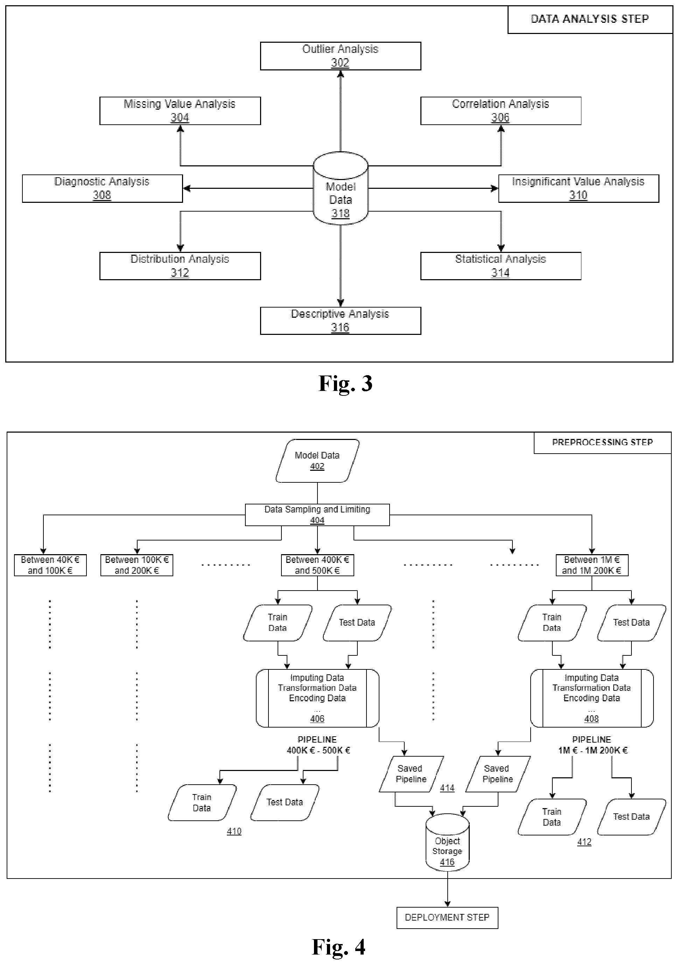

The first process on the machine learning side is the analysis of data which is shown as step 204 of FIG 2. It is explained in depth in FIG 3. At this stage, first of all, the data and the features in the data are tried to be understood. This is what was tried to be done in 316. 316 is the part where summary information about the data is extracted. At this stage, important information about the model data is examined. The number and size of the data and the data types are checked. Model data includes categorical, numerical and boolean data. The type of the property is categorical data. Is it an apartment? studio? etc. The number of bathrooms in the property is a numerical data, and the information whether the house has a garden or not is an example of boolean data (316, 318).

Another type of analysis that tries to understand the model data is statistical analysis. This is what was done in 314. Some statistical information about the model data is extracted. Information about the model data such as the average list price of the houses, the average number of bathrooms, the median value of the bedrooms, and the standard deviations of the features of the houses are checked and the results are noted for application in step 206.

The data that will be input to the machine learning algorithm should be cleaned properly. Otherwise, bad data leads to a bad machine learning result. There are values in the data that need to be analyzed. The first of these are missing values. Missing value is the case where there is no data at any point in the data and it needs to be determined. In step 304, these values are determined by using various programmable functions. Another value to be determined is the outlier values. Outlier values are data points that are drastically different from other values in the data. This analysis is done at step 302 using various statistical functions such as IQR and z-score. Another way to detect outlier values is to look at the scatterplots of numeric features in the data. At the 312 stage, outlier detection is made by creating these scatterplots. In addition, by looking at the distribution plots of the numeric features in 312, an idea about the data is obtained by looking at whether they have a normal distribution or not. Comments are made on the data by looking at the skewness and kurtosis of the distributions. Another thing to look at for machine learning algorithms is unnecessary values and features. There are insignificant values for the machine learning algorithm in the model data. Some of these are data created for the database environment (like id). In addition, the model data may contain duplicate data. Duplicate data is the situation where a house is found more than once in the data. Determination of such values is carried out at step 310. In the 306 and 308 stages, the relations and correlations of the properties of the houses with each other are examined. Here, many visualizations are made using various graphic types to try to capture the patterns in the data. All the analysis results performed are noted down to apply operations to the data in another step. And it goes to step 206 in FIG. 2.

In FIG 4. processes related to data are explained in detail. In this step, the notes taken in FIG 3 are applied to the data and the data is made suitable for the machine learning algorithm. The model data is divided into segments at certain intervals and then each segment is sampled in itself (402, 404). The process is the same for each segment. Data sampling divides the data in each segment into train and test data. Train data makes up 90% of the segment data and 10% of the test data. During sampling, houses with similar patterns are also distributed in the train and test data (402, 404).

Train data is the data to be trained by the machine learning algorithm. The test data is the data that will be used to evaluate the accuracy of the trained model after all the last operations are completed (410, 412). Data preprocessing pipelines are then created to clean and prepare the data. Pipeline is a set of steps in which various functions run sequentially and these functions are applied to the data. In the pipeline, there are operations such as filling missing values with mathematical methods and dropping unnecessary values and features related to the house. Separate pipelines are created for all segment data. Train and test data of all segments are inserted into pipelines and made ready for machine learning algorithms (406, 410, 412). The pipelines created later are saved to be used in deployment step 222 in FIG 2 and thrown into storage (410, 412, 414).

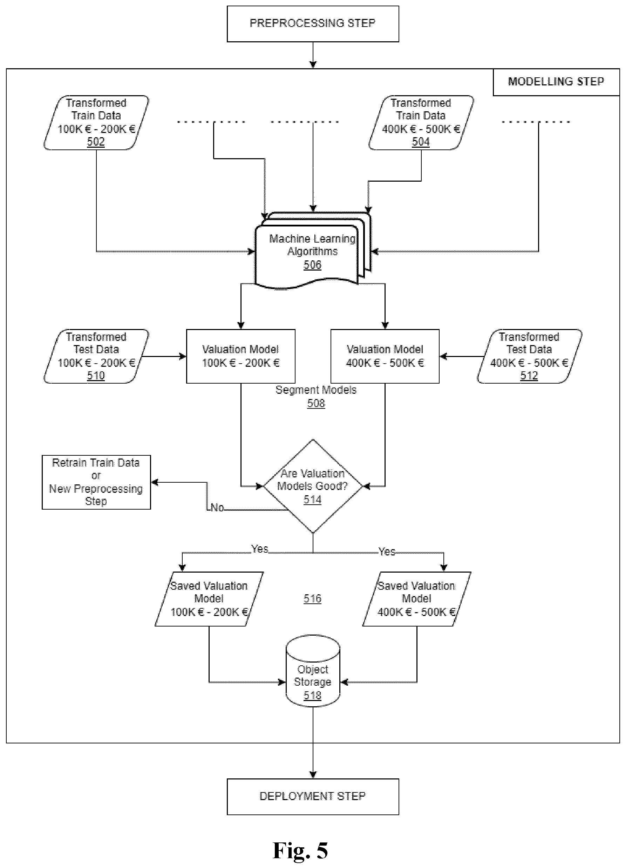

In the FIG 4 step, train and test data for each segment were created and made ready. In FIG 5, the process of entering these train and test data into machine learning algorithms is explained in detail. The purpose of this step is to create and evaluate machine learning models for HSMLA. The transformed training data for each segment is trained by machine learning algorithms (502, 504, 506). The models created with the trained data learn the patterns about the houses and predict that house when a new house arrives, thanks to the patterns it has captured. Decision tree algorithms are used here as an algorithm. The reason for using Decision tree algorithms is that they provide high accuracy, stability and interpretability. Decision trees are tree-based algorithms and a type of supervised machine learning algorithm used to make predictions based on how previous questions have been answered. CatBoost, which was developed as open source, is used as the algorithm. CatBoost is based on the gradient boosting method, which is a variant of decision trees. There are many decision trees in gradient boosting. The main idea is based on the intuition that the best possible next decision tree, when combined with previous decision trees, minimizes the overall prediction error. In step 506 in FIG 5, an algorithm suitable for each segment and data size is created. In order to decide on the correct CatBoost algorithm to be used during the training, the algorithm is determined by performing hyperparameter tuning for each segment, and then the training process takes place(506). After the training, a separate machine learning model is created for each segment, and these models are evaluated with the separated test data. If the model results are bad, the data preprocessing step is returned and the process is repeated. Another option is to repeat the training process by finding a different algorithm (508, 510, 512, 514). If the model results are good, the valuation models created for each segment are saved and transferred to the storage (508, 510, 512, 514, 516, 518). Thus, it is ready for use in deployment step 222 in FIG 2.

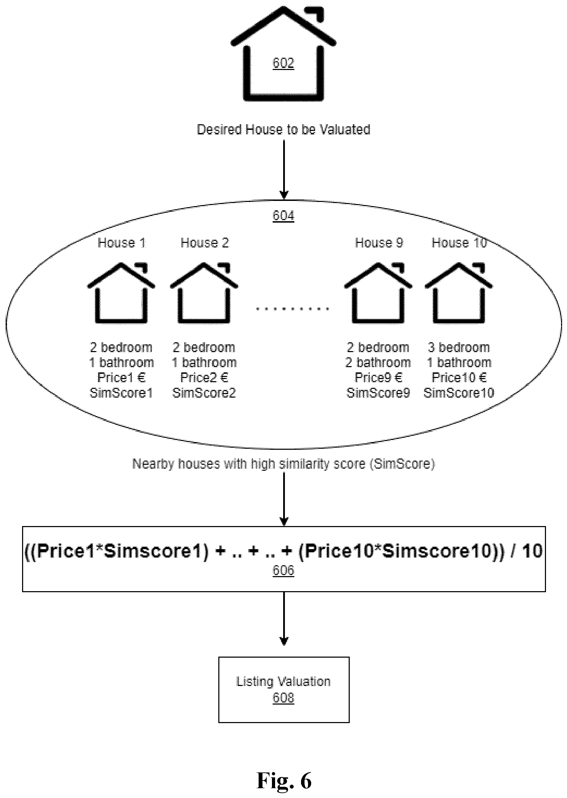

In FIG 6, it is shown in detail how the listing valuation, which is a mathematical and programmatic valuation value that helps HSMLA, is calculated. The closest and most similar 10 houses within a certain diameter of the house to be appraised are listed. Then, using the basic features of these 10 houses, a similarity score is calculated with the house to be evaluated. If the properties of the house being compared to the house to be valued are substantially similar, the similarity score of the house being compared is high(602, 604). Then, these 10 houses are put into the formula in 606 and form the listing valuation value of the house to be valued (608). Then, this listing valuation is sent to the Property Valuation API side of HSMLA and determines which segment of the house to be evaluated will enter the data preprocessing pipeline and machine learning model. This is the most important feature that makes HSMLA different from other valuation algorithms in the industry.

Property Valuation API, on the other hand, is a microservice created to process requests coming from backend servers. Its task is to generate a valuation by running machine learning models using the property information transmitted to it and the information created or saved in the database. Machine learning models are pre-trained with these features and are ready to respond. In addition to the property information sent by backend servers, the API also receives segment information about which machine learning model should be used. The machine learning model in the specified segment works with the relevant features and returns the home prediction in response to the servers.

Valuation API extracts various information from the database using the latitude and longitude of the property. Many features are computed by using the location of the property. These features can be classified as statistical, POI, notary, proximity to points of interest such as nearby restaurants, city landmarks, hospitals etc.. and transaction data. In addition, the property specific information is also included in machine learning models.

Statistical data provides information based on the neighborhood, district, province where the property is located. Market information such as average prices, average prices per square meter, price changes in the neighborhood are tracked and the most recent data also included in machine learning models as well as historical data.

POI data includes the number of important places (they are called points of interest) around the property that enables us to use this information for our machine learning process as well.

Notary data is obtained using open-source channels where the statistics are shared by governments. Notary information has important benefits such as adjusting calculated market value according to the real sales prices and reducing the error rate.

Proximity data, just like POI data, plays an important role. The distance between the property and the previously mentioned points of interests such as hospitals, business centers, and government buildings is calculated.

Transaction data contains historical data and provides the ability to monitor the market past to the present. In this way, the machine learning system can detect existing and future trends and the algorithm makes adjustments on the estimation accordingly.

Machine learning adjusts the models according to trends and keeps up with them that reduces the margin of error and makes better predictions.

Property data consists of the basic characteristics of the property such as size, room count, additional amenities (garage, terrace, etc...). This information plays a big role in price valuation and the main ingredient of the estimation algorithm.

Property Valuation API uses segment information, which provides information about which price-segmented model to be used.

This segment information is calculated by backend and its main goal is to help determine which model to be used to calculate the value of the property.

Segment information is obtained as a result of identifying similar properties with a diameter of 500 meters, 750 meters or 1 km of the relevant property and proportioning their similarities with their listing prices. Then, segment information is sent to Property Valuation API with property information and used when deciding on the segment of the machine learning model.

After deciding which price-segmented model to be used, the property and location specific real estate data including statistical, POI , notary, proximity to points of interests and transaction data are obtained from the database. All of this data is transferred to the machine learning algorithm that has been segmented and selected. Then the corresponding machine learning model, pre-trained and located on the same server as the Property Valuation API, performs the estimation.

The requests from backend contain the property characteristics and price-segment information.

Statistical, POI, transaction, notary and proximity to points of interest are obtained from the database using the location of the property.

The data coming from the backend request and the database are combined and transformed into a feature set that contains all the features for machine learning.

Corresponding price-segmented machine learning models are selected and the prepared feature set is sent to the machine learning model.

The machine learning model generates the property valuation and sends it back to the backend servers.

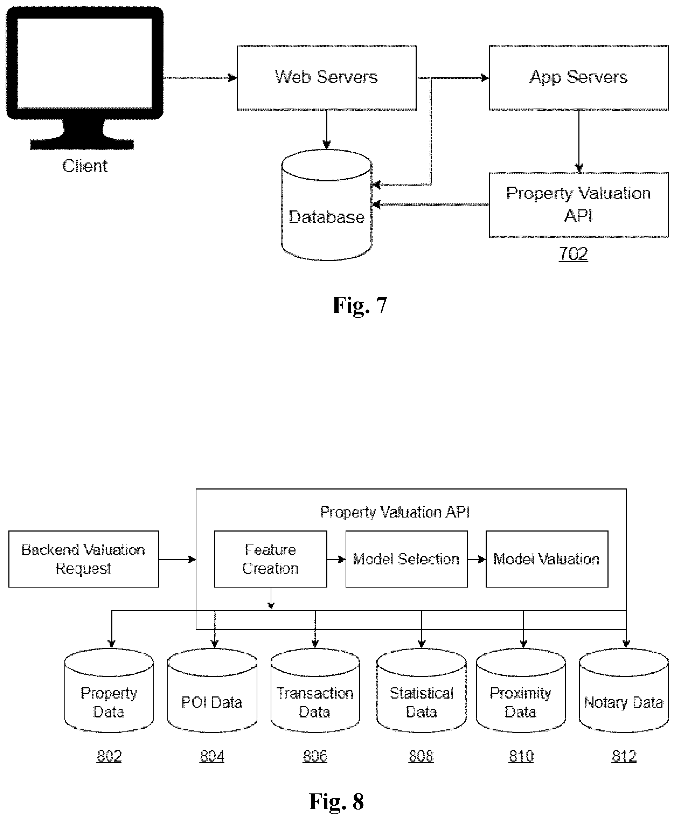

Figure 7 shows steps of process where;
- Users who want to make property valuations access to the user interface through web servers.
- Users initiate the valuation process by sending a request to the machine Learning (ML) API via application servers.
- ML API selects the appropriate segment-based machine learning model using the information sent within the request and the information obtained from the database.
- The valuation is done using the selected machine learning model and the result is transmitted to the app servers.

Figure 8 shows the features of the system where;
- six types of data in databases are used to meet the valuation request from the backend:
   1) Property data
   2) POI data
   3) Transaction data
   4) Statistical data
   5) Proximity data
   6) Notary data
- In addition to the data listed above, new data is derived with various combinations and create features.
- The machine learning model is selected according to the segment information provided by the backend.
- Selected model is used for making the valuation.

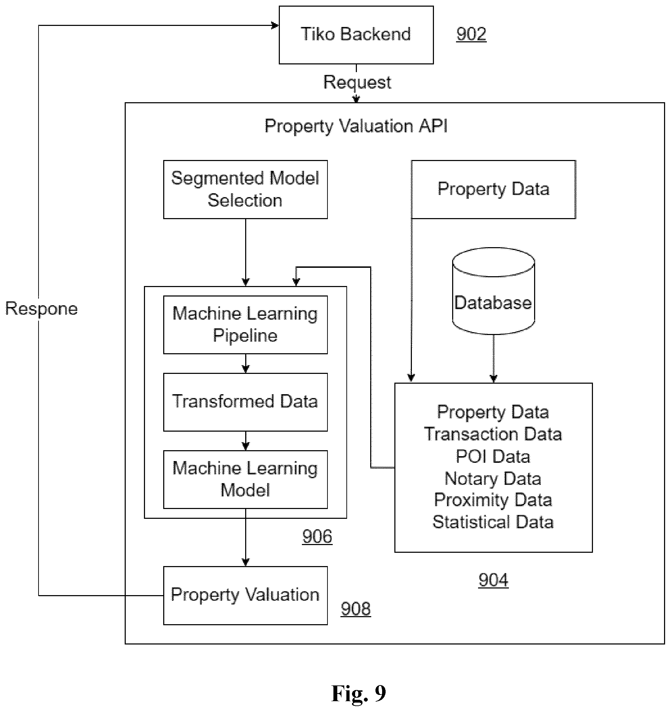

Figure 9 shows steps of the system where;
- The request is sent from Backend server to system interface (ML API).
- This request contains segment data and property data.
- Property data is combined with Transaction, POI, Notary, Proximity and Statistical data pulled from the database.
- By using the segment data from Backend, the corresponding price segment model is selected.
- Selected machine learning model also determines the machine learning pipelines that will perform machine learning data transformations.
- All data first goes to the machine learning pipelines and undergoes the necessary transformation.
- The transformed data is transferred to the selected machine learning model and this model performs the valuation.
- Valuation is sent in response to the backend request.

## Claims

1. Computer-implemented hybrid segmented machine learning based method for valuation of real estate, comprising steps of
i. Forming model data by combining property data, proximity data, Point of Interest data, statistical data, transaction data and notary data on dataset
ii. Analyzing model data
iii. Segmenting model data
iv. Creating preprocessing pipeline for each segment
v. Dividing each segment into train data and test data
vi. Creating machine learning models by training the train data
vii. Evaluating created models for each segment with test data
viii. Deployment of trained machine learning model

2. Method according to Claim 1 where analyzing model data comprises outlier analysis, correlation analysis, insignificant value analysis, statistical analysis, descriptive analysis, distribution analysis, diagnostic analysis and missing value analysis.

3. Method according to Claim 1 where segmenting the model data is performed by dividing model data into segments at certain price intervals.

4. Method according to Claim 1 where creating preprocessing pipeline for each segment is obtained by data sampling dividing the data in each segment into train and test data.

5. Method according to Claim 1 where the machine learning models created with the trained data learn the patterns about real estate and predict that real estate when a new real estate arrives, by using patterns it has captured.

6. Method according to Claim 5 where tree-based algorithm, preferably algorithms using gradient boosting method, are used as machine learning algorithm.

7. Method according to Claim 1 further comprises steps of
i. Sending request from Backend server to system interface where this request contains segmented data and property data
ii. Combining property data with the model data
iii. Selecting price segment model by using the segment data from Backend server
iv. Selecting machine learning model which determines the machine learning pipelines that perform machine learning data transformations
v. Transferring transformed data to selected machine learning model
vi. Selected machine learning model performs the valuation
vii. Valuation is sent in response to the backend request.
